(19) Europäisches Patentamt
European Patent Office
Office européen des brevets

(11) Numéro de publication : **0 357 492 B1**

(12) # FASCICULE DE BREVET EUROPEEN

(45) Date de publication du fascicule du brevet : **22.07.92 Bulletin 92/30**

(51) Int. Cl.$^5$ : **C04B 41/87,** C04B 35/56, C04B 35/84, C04B 41/89

(21) Numéro de dépôt : **89402334.0**

(22) Date de dépôt : **24.08.89**

(54) **Procédé de traitement thermique de fibres céramiques à base de silicium et de carbone et fibres de même nature à structure stratifiée.**

(30) Priorité : **26.08.88 FR 8811245**

(43) Date de publication de la demande : **07.03.90 Bulletin 90/10**

(45) Mention de la délivrance du brevet : **22.07.92 Bulletin 92/30**

(84) Etats contractants désignés : **BE CH DE ES GB IT LI NL SE**

(56) Documents cités :
**EP-A- 0 275 652**
**GB-A- 2 080 781**
**US-A- 4 746 480**
**AMERICAN CERAMIC SOCIETY BULLETIN, vol. 66, no. 8, août 1987, page 1248, Westerville, OH, US; "A1203-SiC bonding dependent onSi02 content"**
**CERAMIC ENGINEERING AND SCIENCE PROCEEDINGS, vol. 5, no. 7/8, juillet-août 1984, pages 574-582, Columbus, Ohio, US; J.J.LANNUTTI et al.: "Sol-Gel Derived Coatings on SiC and Silicate fibers"**

(73) Titulaire : **AEROSPATIALE Société Nationale Industrielle**
**37, Boulevard de Montmorency**
**F-75016 Paris (FR)**

(72) Inventeur : **Lespade, Pierre**
**Résidence "Les Olympiades" bât Montréal A 514**
**F-33700 Merignac (FR)**
Inventeur : **Guette, Alain**
**125, avenue Jules Guesde**
**F-33110 Le Bouscat (FR)**
Inventeur : **Menessier, Erik**
**7, rue Marie Noel**
**F-65000 Tarbes (FR)**
Inventeur : **Pailler, René**
**29, Allée de la Lande**
**F-33610 Cestas (FR)**

(74) Mandataire : **Lepeudry-Gautherat, Thérèse et al**
**CABINET LEPEUDRY, 52, avenue Daumesnil**
**F-75012 Paris (FR)**

**EP 0 357 492 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

## Description

La présente invention concerne un procédé de traitement thermique de fibres céramiques à base de silicium et de carbone et plus particulièrement de SiC. Elle concerne également des fibres à structure stratifiée qui peuvent être obtenues par un tel procédé de traitement.

Les fibres à base de SiC sont en particulier utilisées dans les domaines de l'aéronautique, du spatial, des véhicules terrestres en tant que fibres de renforcement de composites, notamment des composites à matrice céramique (C.M.C.).

Les propriétés thermo-mécaniques de tels composites dépendent principalement des propriétés du renforcement fibreux (par exemple fibres à base d'alumine ou de carbure de silicium) et des interfaces matrice-fibre. De façon générale, les solides filamentaires présentant une certaine fragilité ont une résistance qui dépend dans une large mesure de la présence de défauts de surface. Ceux-ci nécessitent une protection de la surface des fibres au cours de la fabrication des C.M.C. et de leur utilisation.

D'un point de vue chimique, une fibre céramique est habituellement exposée à l'effet de quatre agents chimiques différents :

– les réactifs utilisés pour former la matrice selon une méthode de préparation en phase liquide ou vapeur,
– la matrice céramique,
– l'interphase pouvant être utilisée pour gérer la liaison fibre/matrice et obtenir une ténacité élevée, et
– l'atmosphère gazeuse (par exemple l'air).

Selon leur nature, ces composants peuvent réagir avec la fibre à haute température et entraîner une diminution de sa capacité de renforcement.

Ces différentes réactions peuvent modifier profondément les défauts de surface des fibres par un élargissement de quelques uns des défauts existants ou la création de nouveaux défauts, et ainsi abaisser la résistance à la rupture de la fibre.

Pour protéger les fibres de ces réactions mais aussi pour améliorer leurs qualités mécaniques et leur conférer une certaine indépendance vis-à-vis de la matrice, il est connu de revêtir la surface de ces fibres d'une couche formant interphase. Cette interphase peut être par exemple du pyrocarbone ou du nitrure de bore hexagonal. Dans certains cas, lorsque la fabrication du composite met en oeuvre des températures suffisamment élevées, la formation de l'interphase peut se faire au cours de la fabrication du composite. Ainsi il se forme une interphase de carbone dans des composites à matrice d'alumino-silicate de lithium renforcés de fibres à base de SiC (J.J BRENNAN Tailoring Multiphase and Composite Ceramics, Material Science Research, RE. TESSLER et al, p.549-560, Plenum press New-York, 1986).

Toutefois, l'utilisation de tels dépôts ne donne pas complètement satisfaction, notamment dans le cas des composites préparés par la voie sol-gel.

La Demanderesse a pu maintenant mettre au point un procédé de traitement d'une fibre céramique à base de silicium et de carbone et plus particulièrement de SiC, qui a pour but d'éviter les inconvénients de l'art antérieur et de former une couche extérieure de carbone.

Le procédé selon l'invention consiste à effectuer un traitement thermique sous vide pendant une durée d'au moins environ 3 heures à une température de l'ordre de 1000°C.

Préférentiellement, le traitement est réalisé pendant une durée suffisante pour obtenir une structure stratifiée comportant une couche extérieure de carbone. Cette durée dépend évidemment des caractéristiques physiques et chimiques de la fibre traitée. On a pu constater toutefois qu'une durée d'environ 60 heures donnait des résultats satisfaisants, notamment pour les fibres issues d'un polycarbosilane réticulé à l'oxygène.

Bien entendu le traitement thermique selon l'invention peut être appliqué aux fibres longues aussi bien à l'état non tissé qu'à l'état tissé sous forme multidirectionnelle, mais également aux fibres courtes ou longues disposées de manière aléatoire.

Selon un mode de réalisation de l'invention, la fibre à base de silicium et de carbone, et plus particulièrement de SiC, contient de l'oxygène et un excès de carbone. Dans ce cas, le traitement thermique permet d'obtenir des fibres entourées d'une couche de $SiO_2$ endogène,elle-même revêtue d'une couche de carbone endogène.

Ces fibres présentent donc en elles-mêmes une structure originale et constituent également un objet de la présente invention.

La couche de $SiO_2$ peut provenir de l'oxydation du carbure de silicium suivant la réaction :

$$SiC + 3/2\ O_2 \longrightarrow SiO_2 + CO\nearrow$$

l'oxygène étant contenu dans la fibre à base de SiC.

La formation de la couche de carbone provient d'un excès de carbone dans la composition de la fibre. Elle

donne à celle-ci un aspect lisse, sans aucun défaut.

Préférentiellement, les fibres sont issues d'un précurseur organométallique tel qu'un polycarbosilane ; celui-ci est, avantageusement, réticulé à l'oxygène.

Pour une durée de traitement de l'ordre de 60 h l'épaisseur de la couche de silice est d'environ 500 à 1000 Å, et celle de la couche de carbone d'environ 100 à 500 Å.

Les fibres traitées selon l'invention permettent de renforcer avantageusement les composites à matrice céramique et d'envisager grâce à leurs propriétés, c'est-à-dire absence de défauts et grande résistance à la rupture, leur utilisation dans de nouveaux domaines techniques.

La présente invention sera maintenant décrite plus en détails par l'exemple de réalisation suivant, qui illustre l'invention sans toutefois en limiter la portée. L'exemple a été réalisé à l'air et sous vide, afin de comparer les résultats et dégager l'intérêt de l'utilisation du vide.

Cet exemple a été réalisé sur des fibres céramiques à base de carbure de silicium (par exemple la fibre Nicalon de Nippon Carbon), obtenues par filage, réticulation et pyrolyse en atmosphère inerte d'un précurseur de type polycarbosilane. Ces fibres présentent une composition, une structure et une microstructure complexes. Pour rendre infusibles les fibres de polycarbosilane, un traitement de réticulation à l'oxygène est effectué avant pyrolyse. Il en résulte que les fibres à base de carbure de silicium obtenues selon cette voie contiennent des quantités significatives d'oxygène (à titre d'illustration, la composition atomique des fibres NLM 202 utilisées dans l'exemple ci-après est : 37,0 % Si, 47,9 % C et 15,1 % O). Lorsque la pyrolyse du polycarbosilane est effectuée à basse température (par exemple inférieure à 1000°C), la fibre est amorphe et constituée d'entités tétraèdriques $Si(C,O)_4$. Pour des températures de pyrolyse supérieures, il se forme, au sein de la matrice amorphe, des cristallites de carbure de silicium et de carbone libre de très petite taille. Dans les fibres à base de SiC de type Nicalon, le procédé de cristallisation n'est pas achevé. Cette remarque justifie que ces fibres soient très résistantes au plan mécanique à température ambiante mais également puissent évoluer lors de traitements à haute température.

EXEMPLE :

Les traitements thermiques, d'une durée de 3 et 60 heures, ont été effectués à 1000°C, soit à l'air, soit dans des ampoules de verre de silice scellées sous vide, sur des mèches de fibres Nicalon (comportant environ 500 monofilaments de 14 μ de diamètre moyen). La résistance à la rupture en traction a été mesurée à la température ambiante, sur des lots de 40 monofilaments extraits des mèches, avec une longueur d'éprouvette de 50 mm. Les valeurs des contraintes à la rupture ont été analysées, au plan statistique, sur la base de la fonction de WEIBULL et caractérisées par leur médiane $\sigma_r(0,5)$ et leur module de WEIBULL m (W.J. WEIBULL Appl. Mech., vol. 18, (1951), p.293-397). Elles ont été corrélées aux modifications de la structure externe des fibres, observées par la microscopie électronique à balayage et la microanalyse par spectrométrie d'électrons AUGER, liées au traitement thermique.

Les résultats des essais de traction sur monofilaments, sont donnés au tableau I ci-après

| | Fibres non traitées | Traitement sous vide (3 h) | Traitement sous vide (60 h) | Traitement sous air (60 h) |
|---|---|---|---|---|
| $\sigma_r(0,5)$(MPa) | 1880 | 1810 | 2565 | 795 |
| m | 4,8 | 5,7 | 4,0 | 2,6 |

Tableau I : Influence d'un traitement à 1000°C sur la résistance à la rupture, à température ambiante des fibres.

Il apparaît qu'un traitement sous vide de courte durée ne modifie pas de manière significative la contrainte à rupture moyenne des fibres. En revanche, il augmente légèrement le module de WEIBULL (m).

Au contraire, pour des durées de traitement beaucoup plus longues (c'est-à-dire 60 heures), l'évolution de la résistance à la rupture de la fibre est beaucoup plus marquée et dépend de la nature de l'atmosphère

gazeuse. Lorsqu'il est effectué à l'air, le traitement abaisse à la fois la contrainte à rupture moyenne et le module de WEIBULL. Ce traitement revient en effet à introduire dans la fibre des défauts de plus grande taille par rapport à la population de défauts initiale. L'analyse de la surface de la fibre permet de préciser l'origine de ces nouveaux défauts. Un traitement prolongé à l'air conduit à la formation d'une couche relativement épaisse de silice (e = 0,4 μ) à la surface de la fibre qui présente notamment l'inconvénient de gêner le dégagement du monoxyde de carbone formé.

Lorsque le traitement prolongé est effectué sous vide, non seulement la fibre n'est plus dégradée mécaniquement mais sa contrainte à rupture moyenne est augmentée d'environ 50 % sans modification importante de la valeur du module de WEIBULL. L'analyse de la fibre montre que sa surface est lisse et constituée d'un film de carbone de faible épaisseur (c'est-à-dire environ 100 Å) recouvrant une couche de silice d'épaisseur beaucoup moins importante (c'est-à-dire d'environ 500 Å) que dans le cas précédent. L'augmentation de la résistance à la rupture de la fibre est sans doute principalement liée à la modification de sa surface (cicatrisation de certains défauts de surface, effet protecteur du film de carbone), une modification interne n'étant toutefois pas à exclure.

Compte tenu des excellentes propriétés mécaniques des fibres ainsi traitées, celles-ci pourront être avantagement utilisées dans la réalisation de matériaux composites à renfort fibreux.

## Revendications

1. Procédé de traitement de fibres céramiques à base de silicium et de carbone, caractérisé en ce qu'il consiste en un traitement thermique effectué sous vide, pendant une durée d'au moins 3 heures et à une température de l'ordre de 1000°C.

2. Procédé de traitement selon la revendication 1, caractérisé en ce que le traitement thermique est réalisé pendant une durée de l'ordre de 60 heures.

3. Fibres céramiques à base de silicium et de carbone caractérisées en ce qu'elles sont entourées d'une couche de $SiO_2$ endogène, elle-même revêtue d'une couche de carbone endogène.

4. Fibres selon la revendication 3, caractérisées en ce qu'elles sont issues d'un précurseur organométallique.

5. Fibres selon la revendication 4 caractérisées en ce que le précurseur organométallique est un polycarbosilane.

6. Fibres selon la revendication 4 ou 5, caractérisées en ce que le précurseur a été réticulé à l'oxygène.

7. Fibres selon l'une quelconque des revendications 3 à 6 caractérisées en ce que l'épaisseur de la couche de silice est comprise entre 500 et 1000 Å.

8. Fibres selon l'une quelconque des revendications 3 à 7, caractérisées en ce que l'épaisseur de la couche de carbone est comprise entre 100 et 500 Å.

## Patentansprüche

1. Verfahren zur Behandlung von keramischen Fasern auf der Basis von Silizium und Kohlenstoff, dadurch gekennzeichnet, daß es aus einer unter Vakuum während einer Dauer von mindestens 3 Stunden und bei einer Temperatur in der Größenordnung von 1000°C ausgeführten thermischen Behandlung besteht.

2. Verfahren nach Anspruch 1, dadurch gekennzeichnet, daß die thermische Behandlung während einer Dauer in der Größenordnung von 60 Stunden durchgeführt wird.

3. Keramische Fasern auf der Basis von Silizium und Kohlenstoff, dadurch gekennzeichnet, daß sie von einer endogenen $SiO_2$-Schicht umgeben sind, die selbst mit einer endogenen Kohlenstoffschicht überzogen ist.

4. Fasern nach Anspruch 3, dadurch gekennzeichnet, daß sie aus einem metallorganischen Vorprodukt hervorgegangen sind.

5. Fasern nach Anspruch 4, dadurch gekennzeichnet, daß das metallorganisches Vorprodukt aus einem Polykarbosilan besteht.

6. Fasern nach Anspruch 4 oder 5, dadurch gekennzeichnet, daß das Vorprodukt durch Sauerstoff vernetzt wurde.

7. Fasern nach einem der Ansprüche 3 bis 6, dadurch gekennzeichnet, daß die Dicke der Siliziumdioxidschicht im Bereich zwischen 500 und 1000 Å liegt.

8. Fasern nach einem der Ansprüche 3 bis 7, dadurch gekennzeichnet, daß die Dicke der Kohlenstoffschicht im Bereich zwischen 100 und 500 Å liegt.

## Claims

1. A method for treating ceramic fibres based on silicon and carbon, characterised in that it consists in a heat treatment carried out under vacuum for a period of at least 3 hours and at a temperature of the order of 1000°C.

2. A treatment method according to Claim 1, characterised in that the heat treatment is carried out for a period of the order of 60 hours.

3. Ceramic fibres based on silicon and carbon, characterised in that they are surrounded by a layer of endogenous $SiO_2$, itself coated with a layer of endogenous carbon.

4. Fibres according to Claim 3, characterised in that they originate from an organometallic precursor.

5. Fibres according to Claim 4, characterised in that the organometallic precursor is a polycarbosilane.

6. Fibres according to Claim 4 or 5, characterised in that the precursor has been oxygen crosslinked.

7. Fibres according to any one of Claims 3 to 6, characterised in that the thickness of the silica layer ranges between 500 and 1000 Å.

8. Fibres according to any one of Claims 3 to 7, characterised in that the thickness of the carbon layer ranges between 100 and 500 Å.